# EUROPÄISCHE PATENTSCHRIFT

(11) **EP 2 595 518 B1**
(45) Veröffentlichungstag und Bekanntmachung des Hinweises auf die Patenterteilung: **26.11.2014**
(21) Anmeldenummer: 12723462.3
(22) Anmeldetag: 23.05.2012
(51) Int. Cl.: A47J 31/60

(54) **VERFAHREN UND REINIGUNGSSYSTEM FÜR HEISSGETRÄNKEAUTOMATEN**
METHOD AND CLEANING SYSTEM FOR AN AUTOMATIC HOT BEVERAGE MACHINE
PROCÉDÉ ET SYSTÈME DE NETTOYAGE D'AUTOMATES À BOISSONS CHAUDES

(30) Priorität: 10.06.2011 DE 102011077435
(43) Veröffentlichungstag der Anmeldung: 29.05.2013
(73) Patentinhaber: BWT Aktiengesellschaft, 5310 Mondsee (AT)
(72) Erfinder: KOCH, Michael, 82467 Garmisch (DE)
(74) Vertreter: Patentanwälte Ruff, Wilhelm, Beier, Dauster & Partner
(86) Internationale Anmeldenummer: PCT/EP2012/059576
(87) Internationale Veröffentlichungsnummer: WO 2012/168075

(56) Entgegenhaltungen:
- EP-A1- 1 795 092
- EP-A1- 1 878 370
- EP-A1- 1 911 382
- DE-A1- 10 032 371

## Beschreibung

Die vorliegende Erfindung betrifft ein Verfahren zum Reinigen des Milchsystems eines Getränkeautomaten für milchhaltige Heißgetränke, eine Reinigungseinrichtung, die in einem solchen Verfahren zum Einsatz kommen kann und einen Heißgetränkeautomaten mit einer solchen Reinigungseinrichtung.

Bei modernen Heißgetränkeautomaten wie Kaffeemaschinen handelt es sich häufig um Vollautomaten, die auf Knopfdruck verschiedene Kaffeetypen wie Espresso, Milchkaffee oder Cappuccino ausgeben. Zur Herstellung der milchhaltigen Kaffeegetränke wird in der Regel Milch mittels einer Milchpumpe über eine Zufuhrleitung aus einem entsprechenden Vorratsbehälter gefördert, in der Kaffeemaschine erwärmt, gegebenenfalls aufgeschäumt und mit Kaffee gemischt. Das so erhaltene Kaffegetränk wird über eine Ausgabeeinheit der Kaffeemaschine ausgegeben.

Problematisch ist dabei, dass Milch sehr stark zum Verkeimen neigt. Aus diesem Grund muss das Milchsystem eines Heißgetränkeautomaten, d.h. alle mit Milch in Kontakt kommenden Teile des Automaten, in regelmäßigen Abständen gereinigt werden. Hierzu wird üblicherweise die erwähnte Zufuhrleitung für Milch in einen Behälter überführt, welcher ein Reinigungsmittel enthält. Mit Hilfe der üblicherweise für die Milchförderung vorgesehenen Pumpe kann das Reinigungsmittel aus diesem in das Milchsystem eingespeist werden zwecks Reinigung desselben bis zur Ausgabeeinheit. Ein derartiges Verfahren ist beispielsweise aus der EP 1 878 370 A1 bekannt. Gemäß dieser ist es vorgesehen, die Zufuhrleitung zur Reinigung in einen Spülraum zu überführen, der eine Heißwasser- und/oder Dampf- und/oder Reinigungsmittel- und/oder Kaltwasser-Einlassöffnung aufweist.

Nachteilig an den bekannten Reinigungsverfahren ist die mitunter komplizierte Handhabung einzelner Reinigungsschritte. Der zu verwendende Reiniger liegt meist als Konzentrat vor und muss vor der Reinigung mit Wasser verdünnt werden. Erfahrungsgemäß werden dabei vom Bedienpersonal regelmäßig zu hohe oder zu niedrige Konzentrationen eingestellt. Nach der Reinigung muss eine Spülung des Systems mit Wasser erfolgen, bei der auch letzte Rückstände des Reinigungsmittels aus dem Milchsystem entfernt werden müssen. Auch dabei werden häufig Fehler gemacht, da für das Bedienpersonal nicht klar ersichtlich ist, ab wann sich keine Reinigungsmittelrückstände mehr im Milchsystem befinden. Weiterhin ist auch hervorzuheben, dass selbst bei ordnungsgemäß durchgeführten Reinigungen stets noch Restkeime im Milchsystem verbleiben, die sich nach der Reinigung wieder schnell vermehren können. Um auch diese zu entfernen, wäre es erforderlich, das Milchsystem zu desinfizieren. Eine praktikable Lösung hierfür ist am Markt bislang aber noch nicht erhältlich.

Aus der DE 100 32 371 A1 sind eine Vorrichtung und ein Verfahren zur Reinigung und Desinfektion von kleinen Trinkwassermengen, wie sie beispielsweise in Kaffeemaschinen benötigt werden, bekannt. Hierbei kommen Elektroden zum Einsatz, über die auf das zu reinigende bzw. zu desinfizierende Wasser eine Spannung angelegt wird. Chemische Hilfsmittel, insbesondere Reinigungsmittel, kommen dabei nicht zum Einsatz.

Der vorliegenden Erfindung lag die Aufgabe zugrunde, eine verbesserte Lösung zur Reinigung des Milchsystems von Heißgetränkeautomaten bereitzustellen.

Diese Aufgabe wird gelöst durch das Verfahren mit den Merkmalen des Anspruchs 1 sowie die Reinigungseinrichtung mit den Merkmalen des Anspruchs 5. Bevorzugte Ausführungsformen des erfindungsgemäßen Verfahrens sind in den abhängigen Ansprüchen 2 und 4 angegeben, bevorzugte Ausführungsformen der erfindungsgemäßen Reinigungseinrichtung in den Ansprüchen 6 und 7. Weiterhin ist auch der Heißgetränkeautomat mit den Merkmalen des Anspruchs 8 von der vorliegenden Erfindung umfasst. Der Wortlaut sämtlicher Ansprüche wird hiermit durch Bezugnahme zum Inhalt dieser Beschreibung gemacht.

Das erfindungsgemäße Verfahren dient zum Reinigen des Milchsystems eines Getränkeautomaten für milchhaltige Heißgetränke. Ein solches Milchsystem umfasst stets
- eine Zufuhrleitung zum Fördern der Milch aus einem Vorratsbehälter,
- eine Zentraleinheit, in der die Milch erwärmt und verarbeitet wird und
- eine Ausgabeeinheit, über die das in der Zentraleinheit zubereitete milchhaltige Heißgetränk ausgegeben wird.

Bei dem Getränkeautomaten kann es sich beispielsweise um eine Kaffeemaschine handeln oder auch um einen Kakaoautomaten. Entsprechend umfasst die Verarbeitung der Milch in der Zentraleinheit beispielsweise das Vermischen der Milch mit Kaffee oder Kakao oder das Aufschäumen der Milch.

Besonders zeichnet sich das erfindungsgemäße Verfahren dadurch aus, dass die Zufuhrleitung des Milchsystems zur Reinigung desselben mit einer Reinigungseinrichtung gekoppelt wird, die mindestens eine Elektrolysezelle umfasst. Bei einer Elektrolyse handelt es sich bekanntlich um einen Prozess, bei dem ein elektrischer Strom eine chemische Reaktion erzwingt. Das Prinzip der Elektrolyse ist seit langem bekannt und bedarf daher keiner näheren technischen Erläuterung. Wichtig für die vorliegende Erfindung ist vor allem das Fachwissen, dass sich mittels Elektrolyse wässriger Lösungen problemlos Substanzen mit großem Oxidations- und damit auch Desinfektionspotential wie Ozon, Wasserstoffperoxid und Chlor erzeugen lassen.

Gemäß der vorliegenden Erfindung wird aus der Reinigungseinrichtung eine Reinigungslösung in das Milchsystem eingespeist, die vor Einspeisung in das Milchsystem die mindestens eine Elektrolysezelle passiert. Gemäß einer ersten, besonders bevorzugten Ausführungsform des erfindungsgemäßen Verfahrens wird dabei die Reinigungslösung mittels der Elektrolysezelle mit elektrischem Strom beaufschlagt, bis es zur Bildung von Elektrolyseprodukten mit desinfizierender Wirkung (wie den genannten Substanzen) kommt. Die Elektrolysezelle ermöglicht es also, dass beim erfindungsgemäßen Verfahren nicht nur eine einfache Reinigung des Milchsystems eines Getränkeautomaten für Heißgetränke erfolgt, sondern gleichzeitig auch eine Desinfektion stattfindet.

Um einer Kalkbildung auf der Oberfläche der Elektroden der Elektrolysezelle entgegenzuwirken, werden die Elektroden bevorzugt in regelmäßigen oder unregelmäßigen Abständen umgepolt, beispielsweise bei jedem neuen Reinigungsgang.

Eine Elektrolysezelle lässt sich ohne weiteres auch als Sensor für die Leitfähigkeit einer wässrigen Lösung verwenden. Auch dies ist dem Fachmann bekannt und bedarf im Rahmen der vorliegenden Erfindung keiner näheren Erläuterung. Gemäß einer zweiten besonders bevorzugten Ausführungsform des erfindungsgemäßen Verfahrens wird die elektrische Leitfähigkeit der Reinigungslösung mittels der Elektrolysezelle, die in dieser Ausführungsform als Sensor fungiert, überwacht. Dies hat mehrere Vorteile, auf die im Einzelnen noch eingegangen wird.

Zu betonen ist, dass die genannte erste und zweite besonders bevorzugte Ausführungsform des erfindungsgemäßen Verfahrens grundsätzlich unabhängig voneinander in einem erfindungsgemäßen Verfahren realisiert werden können. In besonders bevorzugten Ausführungsformen dient die Elektrolysezelle in einem erfindungsgemäßen Verfahren aber sowohl als Sensor als auch zur Erzeugung von Elektrolyseprodukten mit desinfizierender Wirkung, gegebenenfalls auch gleichzeitig.

Die mittels der Elektrolysezelle gemessenen Leitfähigkeitswerte können ohne weiteres dazu verwendet werden, die Konzentration an Reiniger in der Reinigungslösung zu bestimmen. Im Rahmen des vorliegend beschriebenen Verfahrens wird die Reinigungslösung bevorzugt aus Leitungswasser (das gegebenenfalls vorbehandelt, beispielsweise enthärtet, sein kann) und einem Reinigerkonzentrat gebildet. Mit besonderem Vorteil wird auf Basis der mit der Elektrolysezelle gemessenen Leitfähigkeit das Mischungsverhältnis der beiden Komponenten eingestellt oder nachjustiert. Zur Einstellung des Mischungsverhältnisses sind geeignete Einstellungsmittel erforderlich, auf die später noch separat eingegangen wird.

Über- oder Unterkonzentrationen an Reinigerkonzentrat in der Reinigungslösung können so auf einfache Art und Weise ermittelt und durch Gegensteuern bei der Zudosierung des Reinigerkonzentrats ausgeglichen werden. Durch Verwendung einer geeigneten elektronischen Steuerung kann dies ohne weiteres vollautomatisch erfolgen, so dass Fehler durch Bedienpersonal ausgeschlossen werden können.

Für den Fall, dass mit der Elektrolysezelle ein überdeutlicher Abfall der Konzentration an Reiniger in der Reinigungslösung gemessen wird, kann es vorgesehen sein, dass ein akustisches oder optisches Warnsignal ausgegeben wird, mit dem das Bedienpersonal darauf hingewiesen wird, dass die Reinigerkonzentration zu niedrig ist und dass gegebenenfalls Reinigerkonzentrat nachgefüllt werden muss.

Auch beim erfindungsgemäßen Verfahren ist es erforderlich, das Milchsystem nach der Reinigung mit Leitungswasser (das ebenfalls vorbehandelt sein kann) zu spülen, um Reinigerreste aus dem Milchsystem zu entfernen. In besonders bevorzugten Ausführungsformen wird die Dauer des Spülvorgangs auf Basis der mit der Elektrolysezelle gemessenen Leitfähigkeitswerte gesteuert. Die Elektrolysezelle kann exakt anzeigen, ab welchem Zeitpunkt sie von reinigerfreiem Wasser durchflossen wird. Bei bekanntem Volumen und bekannter Fließgeschwindigkeit ist es ohne weiteres errechenbar, wann der Spülvorgang abgeschlossen ist.

Eine erfindungsgemäße Reinigungseinrichtung zum Reinigen des Milchsystems eines Heißgetränkeautomaten umfasst einen mit Reinigungslösung befüllbaren Spülraum zur Aufnahme einer Milchzufuhrleitung des zu reinigenden Milchsystems, eine Zuleitung für Reinigungslösung, die in den Spülraum mündet, und zwei voneinander beabstandete Elektroden zur Beaufschlagung der Reinigungslösung mit elektrischem Strom, die in den Spülraum oder in der Zuleitung für die Reinigungslösung angeordnet sind.

Insbesondere eignet sich eine erfindungsgemäße Reinigungseinrichtung zur Verwendung in einem erfindungsgemäßen Verfahren.

Grundsätzlich kann der Spülraum die gleichen Merkmale aufweisen wie der aus der EP 1 878 370 A1 bekannte Spülraum. Auf die entsprechenden Ausführungen in der EP 1 878 370 A1 wird hiermit Bezug genommen.

Neben den bereit genannten Komponenten umfasst die Einrichtung eine Zuleitung für Leitungswasser (gegebenenfalls mit installiertem Druckminderer), ein Reservoir für Reinigerkonzentrat sowie - wie oben bereits angedeutet - Mittel zum Eindosieren des Reinigerkonzentrats in das Leitungswasser. Hierbei handelt es sich bevorzugt um elektronisch steuerbare Ventile, insbesondere um Magnetventile, bei denen der Durchfluss von Leitungswasser oder Reiniger beispielsweise durch zeitliche Taktung des Öffnungs- und Schließmechanismus gesteuert werden kann.

Um zu gewährleisten, dass das Reservoir mit dem passenden Reinigerkonzentrat befüllt wird, kann das Reservoir beispielsweise ein elektronisches Schloss mit einen RFID-Leser aufweisen, das sich nur mit einem komplementären RFID-Chip öffnen lässt. Ein solcher komplementärer RFID-Chip kann beispielsweise auf die Umhüllung des Reinigerkonzentrats aufgeklebt werden. Die Kommunikation zwischen den RFID-Komponenten kann selbstverständlich verschlüsselt sein.

Mit einer elektronischen Sicherung in Form von komplementären RFID-Sendern und Empfängern oder sonstigen elektronischen Sensoren oder Schaltern kann beispielsweise auch gewährleistet werden, dass das erfindungsgemäße Verfahren nur gestartet werden kann, wenn die Milchzufuhrleitung des zu reinigenden Milchsystems, beispielsweise eine Lanze, ordnungsgemäß im Spülraum der erfindungsgemäßen Reinigungseinrichtung, die bespielsweise schaftförmig ausgebildet sein kann, angeordnet ist.

In einer besonders bevorzugten Ausführungsform ist es möglich, die erfindungsgemäße Reinigungseinrichtung in eine Kühleinrichtung zu integrieren. Hierbei kann es sich insbesondere um eine Kühleinrichtung handeln, die ohnehin zur Kühlung der von dem zu reinigenden Heißgetränkeautomaten benötigten Milch dient.

Entsprechend ist auch ein Heißgetränkeautomat, insbesondere für milchhaltige Heißgetränke, der ein Milchsystem aufweist, das an eine erfindungsgemäße Reinigungseinrichtung gekoppelt ist oder eine solche Einrichtung umfasst, Gegenstand der vorliegenden Erfindung.

Weitere Merkmale der Erfindung ergeben sich aus der nachfolgenden Beschreibung der Zeichnungen. Es sei an dieser Stelle explizit betont, dass sämtliche in der vorliegenden Anmeldung beschriebenen fakultativen Aspekte des erfindungsgemäßen Verfahrens oder der erfindungsgemäßen Einrichtung jeweils für sich allein oder in Kombination mit einem oder mehreren der weiteren beschriebenen fakultativen Aspekte bei einer Ausführungsform der Erfindung verwirklicht sein können.

Die nachfolgende Beschreibung von bevorzugten Ausführungsformen dient lediglich zur Erläuterung und zum besseren Verständnis der Erfindung und ist in keiner Weise einschränkend zu verstehen.

### Figurenbeschreibung

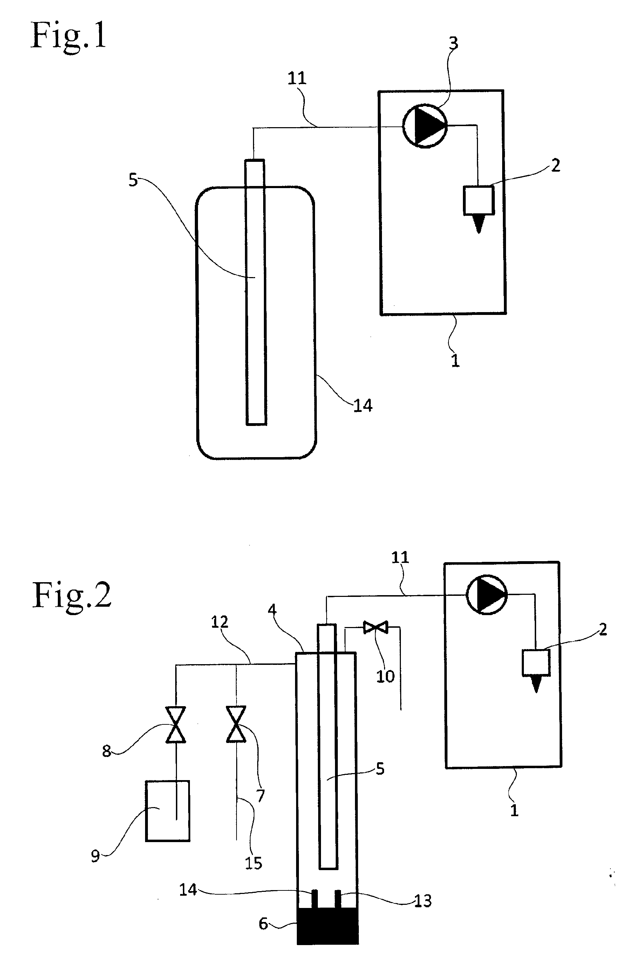

**Fig. 1** zeigt als Beispiel für einen Getränkeautomaten für milchhaltige Heißgetränke eine Kaffeemaschine **1** mit angeschlossenem Vorratsbehälter für Milch (schematische Darstellung). Zur Herstellung eines milchhaltigen Kaffeegetränks wird aus dem Milchvorratsbehälter **14** über eine als Zufuhrleitung dienende Lanze **5** Milch mittels der Pumpe **3** in die Kaffeemaschine **1** gefördert. In dieser wird die Milch erwärmt und mit Kaffee gemischt. Das so erhaltene Heißgetränk wird über die Ausgabeeinheit **2** der Kaffeemaschine **1** ausgegeben. Zur Reinigung des Milchwegs der dargestellten Kaffeemaschine **1** wurde gemäß Stand der Technik die Lanze **5** in einen weiteren Vorratsbehälter (nicht dargestellt) überführt, der mit einer Reinigungslösung befüllt war. Das verbesserte Verfahren gemäß der vorliegenden Erfindung ist hingegen in **Fig. 2** dargestellt.

**Fig. 2** zeigt schematisch eine Kaffeemaschine **1** mit einer angekoppelten Reinigungseinrichtung gemäß der vorliegenden Erfindung. Zur Reinigung des Milchsystems der Kaffeemaschine **1,** welches neben der Ausgabeeinrichtung **2** und Teilen der Pumpe **3** auch die Zuleitung **11** inklusive der Lanze **5** umfasst, wird die Lanze **5** in den als Spülraum dienenden Reinigungsschaft **4** eingeführt. Leitungswasser **15** wird in der Mischstrecke **12** mit Reinigerkonzentrat aus dem Reservoir **9** gemischt. Während des Reinigungsvorgangs ist die Milchpumpe **3** in Betrieb. Das Mischen des Reinigerkonzentrats mit dem Leitungswasser **15** erfolgt mittels der Magnetventile **7** und **8**. Durch zeitliches Takten der Magnetventile **7** und **8**, d.h. Ein-/Ausschalten der Ventile **7** bzw. **8**, wird die gewünschte Reinigerkonzentration eingestellt. Die Reinigerkonzentration kann mit Hilfe der aus den Elektroden **13** und **14** bestehenden Elektrolysezelle (6), welche hierbei als Leitfähigkeitsmesszelle arbeitet, optimal eingestellt werden. Weicht die Konzentration von einem Sollwert ab, so wird diese Abweichung von den Elektroden als Leitfähigkeitsabfall oder -anstieg registriert. Beispielsweise kann über eine elektronische Steuerung, an die diese Abweichung übermittelt wird, die Taktung der Magnetventile **7** und **8** angepasst werden. Die Reinigungslösung strömt über die Leitung **12** in den Reinigungsschaft **4**, der mittels des Ventils **10** entlüftet werden kann. Aus dem Reinigungsschaft **4** wird die Reinigungslösung über die Lanze **5** und die Leitung **11** in die Kaffeemaschine **1** eingesaugt und tritt letztendlich über die Ausgabeeinheit **2** aus der Kaffeemaschine **1** aus. Während der Reinigung wird die Elektrolysezelle (6) mit elektrischem Strom beaufschlagt und produziert dabei ein Desinfektionsmittel wie z.B. Ozon, Wasserstoffperoxid oder Chlor (abhängig von der Zusammensetzung der Reinigungslösung). Das Desinfektionsmittel desinfiziert das Milchsystem während der Reinigung. Nach der Reinigung und der Desinfektion wird das gesamte System mit Wasser gespült. Hierzu wird das Ventil **7** vollständig geöffnet, während das Ventil **8** geschlossen bleibt. Mittels der Elektrolysezelle (6), welche hier wieder als Leitfähigkeitsmesszelle arbeitet, kann die vollständige Ausspülung des Reinigers bzw. Desinfektionsmittels ermittelt werden.

## Patentansprüche

1. Verfahren zum Reinigen des Milchsystems eines Getränkeautomaten für milchhaltige Heißgetränke, das Milchsystem umfassend
• eine Zufuhrleitung (5) zum Fördern der Milch aus einem Vorratsbehälter (14),
• eine Zentraleinheit (1), in der die Milch erwärmt und verarbeitet, insbesondere mit Kaffee oder Kakao gemischt wird, und
• eine Ausgabeeinheit (2), über die das in der Zentraleinheit (1) zubereitete milchhaltige Heißgetränk ausgegeben wird,
**dadurch gekennzeichnet, dass**
• die Zufuhrleitung (5) mit einer Reinigungseinrichtung gekoppelt wird, die eine Elektrolysezelle (6) umfasst,
• aus der Reinigungseinrichtung eine Reinigungslösung in das Milchsystem eingespeist wird, die die Elektrolysezelle (6) passiert und
• die Reinigungslösung mittels der Elektrolysezelle (6) mit elektrischem Strom beaufschlagt wird, bis es zur Bildung von Elektrolyseprodukten mit desinfizierender Wirkung kommt und/ oder
• die elektrische Leitfähigkeit der Reinigungslösung mittels der Elektrolysezelle (6) überwacht wird.

2. Verfahren nach Anspruch 1, **dadurch gekennzeichnet, dass** die Elektroden (13, 14) der Elektrolysezelle (6) in regelmäßigen oder unregelmäßigen Abständen umgepolt werden, insbesondere bei jedem neuen Reinigungsgang.

3. Verfahren nach Anspruch 1 oder Anspruch 2, **dadurch gekennzeichnet, dass** die Reinigungslösung aus Leitungswasser und einem Reinigerkonzentrat gebildet wird und auf Basis der mit der Elektrolysezelle (6) gemessenen Leitfähigkeit das Mischungsverhältnis der beiden Komponenten eingestellt wird.

4. Verfahren nach einem der Ansprüche 1 bis 3, **dadurch gekennzeichnet, dass** das Milchsystem nach der Reinigung mit Leitungswasser gespült wird und auf Basis der mit der Elektrolysezelle (6) gemessenen Leitfähigkeit die Dauer des Spülvorgangs gesteuert wird.

5. Reinigungseinrichtung zum Reinigen des Milchsystems eines Heißgetränkeautomaten, insbesondere zur Verwendung in einem Verfahren nach einem der vorhergehenden Ansprüche, umfassend einen mit Reinigungslösung befüllbaren Spülraum (4) zur Aufnahme einer Milchzufuhrleitung (5) des Milchsystems eines Getränkeautomaten, eine Zuleitung (12) für die Reinigungslösung, die in den Spülraum (4) mündet
, wobei die Reinigungseinrichtung eine Zuleitung für Leitungswasser (15), ein Reservoir für Reinigerkonzentrat (9) sowie Mittel (8) zum Eindosieren des Reinigerkonzentrats in das Leitungswasser umfasst, **dadurch gekennzeichnet ,dass** zwei voneinander beabstandeten Elektroden (13, 14) zur Beaufschlagung der Reinigungslösung mit elektrischem Strom, in dem Spülraum (4) oder in der Zuleitung (12) für die Reinigungslösung angeordnet sind.

6. Einrichtung nach Anspruch 5, **dadurch gekennzeichnet, dass** sie in eine Kühleinrichtung integriert ist.

7. Einrichtung nach einem der Ansprüche 5 oder 6, **dadurch gekennzeichnet, dass** sie eine elektronische Sicherung in Form von komplementären RFID-Sendern und Empfängern oder sonstigen elektronischen Sensoren oder Schaltern aufweist, die gewährleistet, dass die Reinigung nur gestartet werden kann, wenn die Milchzufuhrleitung (5) ordnungsgemäß im Spülraum (4) der erfindungsgemäßen Reinigungseinrichtung angeordnet ist.

8. Heißgetränkeautomat, insbesondere für milchhaltige Heißgetränke, **dadurch gekennzeichnet, dass** er ein Milchsystem aufweist, das an eine Einrichtung nach einem der Ansprüche 5 bis 7 gekoppelt ist, oder eine solche Einrichtung umfasst.

## Claims

1. A method for cleaning the milk system of an automatic beverage machine for hot beverages including milk, the milk system comprising
• a supply line (5) for extracting milk from a storage container (14),
• a central unit (1) in which the milk is heated and processed, in particular mixed with coffee or cocoa, and
• an output unit (2) via which the hot beverage including milk prepared in the central unit (1) is output,
**characterised in that**
• the supply line (5) is coupled to a cleaning device which comprises an electrolysis cell (6),
• from the cleaning device a cleaning solution is fed to the milk system and passes the electrolysis cell (6), and
• electric current is applied to the cleaning solution by means of the electrolysis cell (6), long enough to cause development of electrolysis products having a disinfecting action, and/or
• the electric conductivity of the cleaning solution is monitored using the electrolysis cell (6).

2. The method according to claim 1, **characterised in that** the polarity of the electrodes (13, 14) of the electrolysis cell (6) is reversed at regular or irregular intervals, in particular with each new cleaning run.

3. The method according to claim 1 or claim 2, **characterised in that** the cleaning solution is composed of tap water and a cleaning agent concentrate and the mixing ratio of the two components is adjusted based on the conductivity measured using the electrolysis cell (6).

4. The method according to any one of the claims 1 to 3, **characterised in that** subsequent to cleaning the milk system is flushed with tap water and the timing of the rinsing procedure is controlled based on the conductivity measured using the electrolysis cell (6).

5. A cleaning device for cleaning the milk system of an automatic hot beverage machine, in particular for use in a method according to any one of the preceding claims, comprising a rinsing compartment (4) fillable with cleaning solution for accommodation of a milk supply line (5) of the milk system of an automatic beverage machine, an inlet line (12) for the cleaning solution ending in the rinsing compartment (4),
wherein the cleaning device comprises an inlet line for tap water (15), a reservoir for cleaning agent concentrate (9) and means (8) for metered adding of the cleaning agent concentrate to the tap water,
**characterised in that**
two spaced electrodes (13, 14) for applying electrical current to the cleaning solution are arranged in the rinsing compartment (4) or in the inlet line (12) for the cleaning solution.

6. The device according to claim 5, **characterised in that** it is integrated in a cooling device.

7. The device according to any one of the claims 5 or 6, **characterised in that** it includes an electronic safeguard in the form of complementary RFID transmitters and receivers or other electronic sensors or switches ensuring that cleaning may be started only if the milk supply line (5) is properly arranged in the rinsing compartment (4) of the cleaning device according to the invention.

8. An automatic hot beverage machine, in particular for hot beverages including milk, **characterised in that** it includes a milk system which is coupled to a device according to any one of the claims 5 to 7, or comprises such a device.

## Revendications

1. Procédé de nettoyage d'un système de lait d'un automate à boissons, pour des boissons chaudes contenant du lait, le système de lait comprenant
- une conduite d'alimentation (5) pour transporter le lait depuis un réservoir (14),
- une unité centrale (1), dans laquelle le lait est chauffé et traité, en particulier mélangé avec du café ou du cacao, et
- une unité de décharge (2), par le biais de laquelle la boisson chaude contenant du lait préparée dans l'unité centrale (1) est déchargée,
**caractérisé en ce que**
- la conduite d'alimentation (5) est accouplée à un dispositif de nettoyage qui comprend une cellule d'électrolyse (6),
- une solution de nettoyage est injectée dans le système de lait depuis le dispositif de nettoyage, laquelle solution de nettoyage passe par la cellule d'électrolyse (6) et
- la solution de nettoyage est sollicitée au moyen de la cellule d'électrolyse (6) par un courant électrique jusqu'à ce qu'il se produise des produits d'électrolyse à effet désinfectant et/ou
- la conductivité électrique de la solution de nettoyage est contrôlée au moyen de la cellule d'électrolyse (6).

2. Procédé selon la revendication 1, **caractérisé en ce que** les électrodes (13, 14) de la cellule d'électrolyse (6) inversent leur polarité à intervalles réguliers ou irréguliers, en particulier à chaque nouvelle opération de nettoyage.

3. Procédé selon la revendication 1 ou la revendication 2, **caractérisé en ce que** la solution de nettoyage est formée d'eau du robinet et d'un concentré d'agent de nettoyage et le rapport de mélange des deux composants est ajusté sur la base de la conductivité mesurée avec la cellule d'électrolyse (6).

4. Procédé selon l'une quelconque des revendications 1 à 3, **caractérisé en ce que** le système de lait est rincé après le nettoyage avec l'eau du robinet et la durée de l'opération de rinçage est commandée sur la base de la conductivité mesurée avec la cellule d'électrolyse (6).

5. Dispositif de nettoyage pour nettoyer le système de lait d'un automate à boissons chaudes, en particulier pour l'utilisation dans un procédé selon l'une quelconque des revendications précédentes, comprenant un espace de rinçage (4) pouvant être rempli d'une solution de nettoyage pour recevoir une conduite d'alimentation en lait (5) du système de lait d'un automate à boissons, une conduite d'amenée (12) pour la solution de nettoyage, qui débouche dans l'espace de rinçage (4), le dispositif de nettoyage comprenant une conduite d'amenée pour de l'eau du robinet (15), un réservoir pour un concentré d'agent de nettoyage (9) ainsi que des moyens (8) pour l'injection dosée du concentré d'agent de nettoyage dans l'eau du robinet, **caractérisé en ce que** deux électrodes espacées l'une de l'autre (13, 14) pour solliciter la solution de nettoyage avec un courant électrique sont disposées dans l'espace de rinçage (4) ou dans la conduite d'amenée (12) pour la solution de nettoyage.

6. Dispositif selon la revendication 5, **caractérisé en ce qu'**il est intégré dans un dispositif de refroidissement.

7. Dispositif selon l'une quelconque des revendications 5 ou 6, **caractérisé en ce qu'**il présente une sécurité électronique sous la forme d'émetteurs RFID et de récepteurs complémentaires ou d'autres capteurs électroniques ou commutateurs, laquelle sécurité garantit que le nettoyage ne peut commencer que lorsque la conduite d'alimentation en lait (5) est disposée correctement dans l'espace de rinçage (4) du dispositif de nettoyage selon l'invention.

8. Automate à boissons chaudes, en particulier pour des boissons chaudes contenant du lait, **caractérisé en ce qu'**il présente un système de lait qui est accouplé à un dispositif selon l'une quelconque des revendications 5 à 7, ou qui comprend un tel dispositif.
